# EUROPEAN PATENT SPECIFICATION

(11) **EP 1 961 591 B1**
(45) Date of publication and mention of the grant of the patent: **23.05.2012**
(21) Application number: 06834423.3
(22) Date of filing: 11.12.2006
(51) Int. Cl.: B60H 1/00, B60H 1/03, B60H 1/08

(54) **AIR CONDITIONER**
KLIMAANLAGE
CLIMATISEUR

(30) Priority: 12.12.2005 JP 2005358000
(43) Date of publication of application: 27.08.2008
(73) Proprietor: Calsonic Kansei Corporation, Saitama 331-8501 (JP)
(72) Inventor: KOMABA, Akihiro c/o Calsonic Kansei Corporation, Saitama 331-8501 (JP)
(74) Representative: Grünecker, Kinkeldey, Stockmair & Schwanhäusser
(86) International application number: PCT/JP2006/324668
(87) International publication number: WO 2007/069563

(56) References cited:
- EP-A- 0 857 922
- DE-A1- 10 147 113
- FR-A- 2 798 324
- JP-A- 2000 071 753
- JP-A- 2001 001 751
- JP-A- 2004 017 853
- JP-U- 59 188 711

## Description

The present invention relates to an air conditioner in which an electrically controlled auxiliary heater is provided on a downstream side of a heat exchanger for heating air (heater core).

An air conditioner for vehicles generally has a heating heat exchanger (heater core) that heats air by utilizing hot water from a vehicle's engine (engine coolant), and heats a cabin of the vehicle by heating air taken from inside and outside the vehicle with this heat exchanger and then blowing the heated air to the vehicle cabin. Immediately after start of the vehicle, however, the engine is not warm and therefore the coolant temperature is low, so that the air cannot be heated with the heat exchanger. Particularly in a cold district, the heat exchanger is not enough to heat the air because outside temperature is extremely low. Therefore, there has been provided an auxiliary heater that is composed of an electric heater and the like for applying auxiliary heating to the air heated by the heat exchanger.

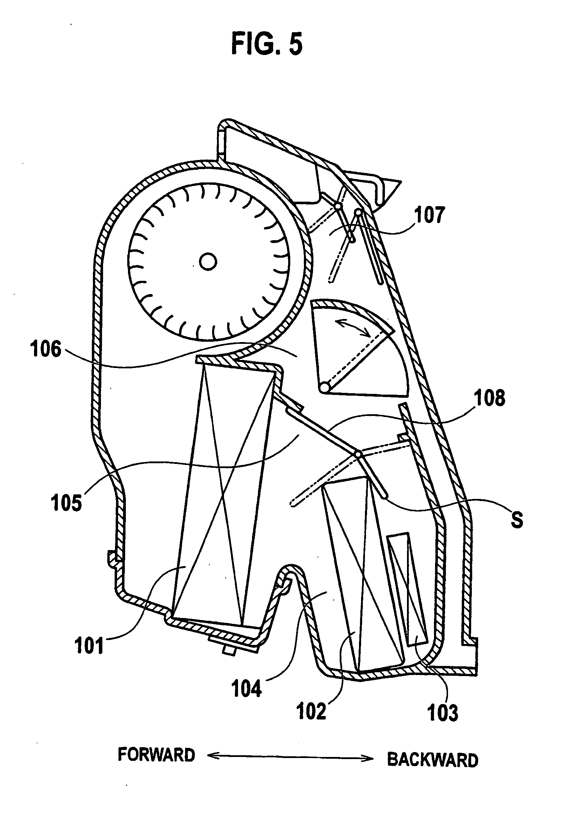

As a related art of this conventional technique, there has been disclosed an "air-conditioning device for vehicle" of Patent Document 1. This device includes: on a downstream side of a cooling evaporator 101, a mixing chamber 106 to which a warm air path 104 and a bypass path 105 are connected and in which downstream sides of both the warm air path 104 and the bypass path 105 merge together to mix flows of air coming therethrough; a blowout path 107 connected to the mixing chamber 106; and an air mix door 108 that switches between the warm air path 104 and the bypass path 105, as shown in FIG. 5. The warm air path 104 has a heating heat exchanger 102 that heats air using an engine coolant of a vehicle and an auxiliary heater 103 composed of an electric heater and the like. This auxiliary heater 103 is disposed on a downstream side of the heat exchanger 102 in parallel therewith, and is small in height and size compared to the heat exchanger 102. According to this conventional technique, at the time of heating shown in FIG. 5, the air mix door 108 is rotated upward to open the warm air path 104 and close the bypass path 105. Therefore, when air taken from inside and outside of a vehicle passes through the warm air path 104, the air is heated by the heat exchanger 102, and then a portion of resultant warm air, which has passed through lower and middle parts of the heat exchanger 102 in a lengthwise direction thereof, is heated further by passing through the auxiliary heater 103, and another portion of the resultant warm air, which has passed through an upper part of the heat exchanger 102, passes through a space S above the auxiliary heater 103 to bypass the same.

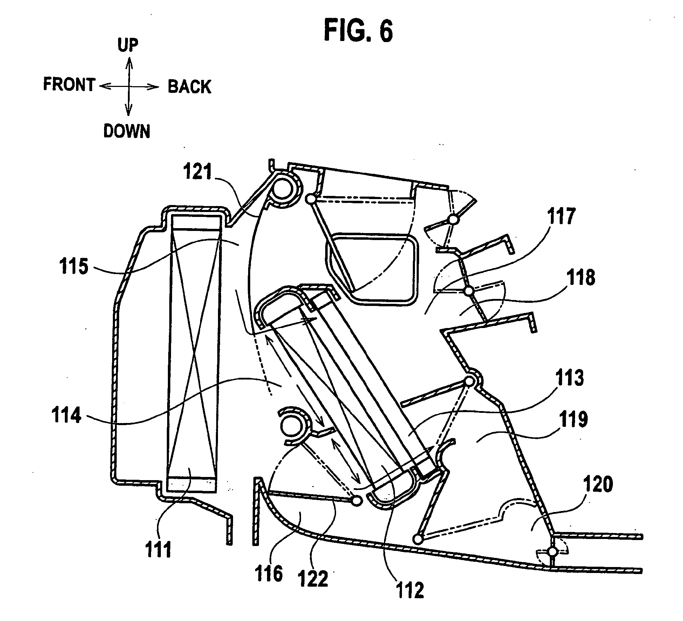

There has also been disclosed an "air conditioner for vehicle" of Patent Document 2. This includes: on a downstream side of a evaporator 111, an upper mixing chamber 117 to which a warm air path 114 having a heating heat exchanger 112 and an auxiliary heater 113 as well as bypass paths 115 and 116 are connected and in which downstream sides of the warm air path 114 and the upper bypass path 115 merge together to mix flows of air coming therethrough; a blowout path 118 connected to the supper mixture chamber 117; a lower mixing chamber 119 in which downstream sides of the warm air path 114 and the lower bypass path 116 merge together to mix flows of air coming therethrough; a blowout path 120 connected to the lower mixing chamber 119, an upper air mix door 121 that switches between the warm air path 114 and the upper bypass path 115; and a lower air mix door 122 that switches between the warm air path 114 and the lower bypass path 116, as shown in FIG. 6. The auxiliary heater 113 is disposed on a downstream side of the heat exchanger 112 in parallel therewith, and is equivalent in height to the heat exchanger 112. According to this conventional technique, at the time of heating shown in FIG. 6, the upper air mix door 121 is rotated upward and the lower air mix door 122 is rotated in a counterclockwise direction of FIC3. 6 thereby to open the warm air path 114 and close the bypass paths 115 and 116. Therefore, when air taken from inside and outside a vehicle passes through the warm air path 114, the air is heated by the heat exchanger 112, and thereafter heated further by the auxiliary heater 103.

According to the conventional technique disclosed in Patent Document 1, however, when the warm air heated by the heating heat exchanger 102 passes through the warm air path 104, the volume of the warm air passing through the upper part of the heat exchanger 102 and the space S above the auxiliary heater 103 is large, and in contrast, the volume of the warm air passing through the lower or the middle part of the heat exchanger 102 in the lengthwise direction thereof and the auxiliary heater 103 is small, because the warm air is low in specific gravity and hence tends to rise, and also because flow resistance becomes smaller with decreasing distance over which the warm air flows. Furthermore, the auxiliary heater 103 has a flow resistance greater than that of the space S, and resultantly the proportion of the warm air passing through the auxiliary heater 103 is small, and the proportion of the warm air passing through the space S is large. Accordingly, a small volume of the warm air passing through the auxiliary heater 103 is heated further by the same and then blown out to a vehicle cabin after mixed with the warm air that has bypassed the auxiliary heater 103, which disadvantageously leads to a lack of heating because of a comparatively low temperature of this blown-out warm air. Moreover, hot water from the engine flows into the heat exchanger 102 from downward, and hence the lower side of the heat exchanger 102 reaches high temperature, which exerts a large heat influence on the auxiliary heater 103 that is disposed opposite to the lower and middle parts of the heat exchanger 102 in the lengthwise thereof. This produces a significant temperature difference of the warm air blown out from upper and lower sides of the auxiliary heater 103 immediately after it is activated, and afterwards, the auxiliary heater 103 disadvantageously suppresses heat generation thereof based on self-regulation.

Furthermore, according to the conventional technique disclosed in Patent Document 2, the auxiliary heater 113 is large in size and equivalent in height to the heat exchanger 112, and therefore the warm air passing through the warm air path 114 also passes through the auxiliary heater 113, thereby reducing the volume of the blown-out warm air because of flow resistance. Accordingly, when the warm air is heated further by the auxiliary heater 113 and then blown out to the vehicle cabin, this small volume of the blown-out warm air disadvantageously leads to a lack of heating.
Moreover, Document D3 discloses an air conditioning system according to the preamble of claim 1.

The present invention has been made in consideration of the aforementioned conventional techniques, and an object thereof is to provide an air conditioner that can blows out a comparatively high temperature and large volume of warm air even in a condition that a heating heat exchanger cannot generate sufficient heat.
Patent Document 1: Japanese Patent Application Laid-Open No. 2003-34114 (paragraphs [0013] to [0020], FIG. 1)
Patent Document 2: Japanese Patent Application Laid-Open No. 2005-59808 (paragraphs [0035] to [0040], FIG. 1)
Patent Document 3: Publication Number: FR 2 798 324

In order to achieve the foregoing object, according to the present invention, there is provided an air conditioner that includes: on a downstream side of a cooling evaporator, a mixing chamber to which a warm air path having a heating heat exchanger and a bypass path bypassing the warm air path are connected and in which downstream sides of the warm air path and the bypass path merge together to mix flows of air coming therethrough; and a blowout path connected to the mixing chamber. At a position in which warm air having passed the heat exchanger has a first air speed, an auxiliary heater is disposed in series with the heat exchanger so that a portion of the warm air passes through the auxiliary heater, and another portion of the warm air bypasses the auxiliary heater by passing through an area in which a second air speed of the warm air having passed the heat exchanger is slower than the first air speed.

According to the present invention having this constitution, when the warm air path is opened at heating, a portion of the warm air having passed the heat exchanger passes through the auxiliary heater at a first air speed and hence in a large volume, so that auxiliary heating can be made sufficiently by the auxiliary heater. Furthermore, another portion of the warm air bypasses the auxiliary heater by passing through the area in which a second air speed is slower than the first air speed. Therefore, the flow resistance of the warm air passing through the warm air path can be suppressed, thereby securing a sufficient volume of the warm air. Accordingly, by heating further the warm air having passed through the heat exchanger by the auxiliary heater and then mixing the heated air with the warm air having bypassed the auxiliary heater, a comparatively high temperature and large volume of warm air can be blown even when the heating heat exchanger cannot generate sufficient heat.

According to the present invention, even when the heating heat exchanger cannot generate sufficient heat at the time of heating, a comparatively high temperature and large volume of warm air can be blown out. Therefore, an air conditioner can be obtained which provides sufficient heating even, for example, when an engine is not warmed up immediately after the start of a vehicle.

FIG. 1 is a cross section of an air conditioner according to an embodiment of the present invention;
FIG. 2 is a cross section along a line A-A of FIG. 1;
FIG 3 is a front view of a heating heat exchanger provided in the embodiment;
FIG 4 is a front view showing a modified example of the heating heat exchanger provided in the embodiment;
FIG. 5 is a cross section showing a conventional example of an air conditioner for vehicles; and
FIG. 6 is a cross section showing another conventional example of the air conditioner for vehicles.

An air conditioner according to an embodiment of the present invention will be described below with reference to the drawings.

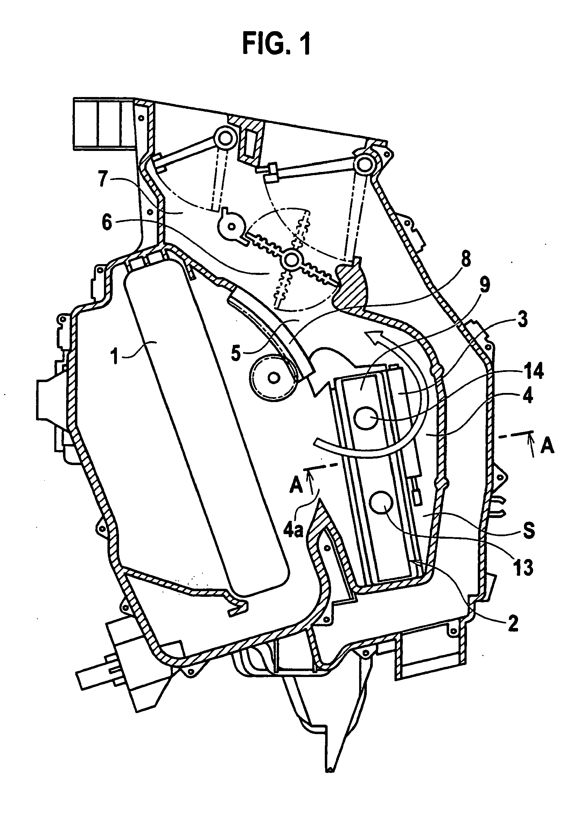

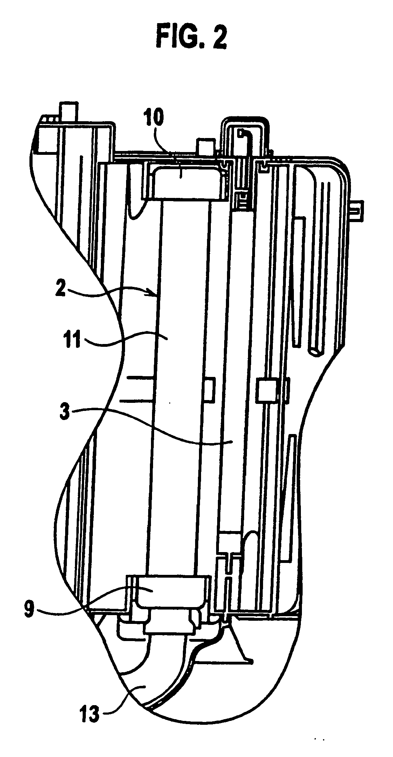

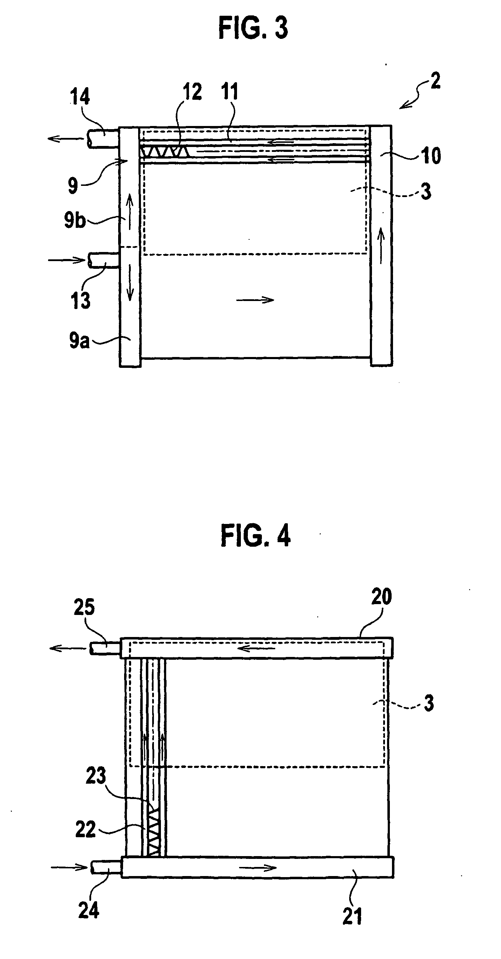

FIG. 1 is a cross section of the air conditioner according to the embodiment of the present invention, FIG. 2 is a cross section along a line A-A of FIG. 1, FIG. 3 is a front view of a heating heat exchanger provided in the embodiment, and FIG. 4 is a front view of a modified example of the heat exchanger provided in the embodiment.

Referring to FIGS. 1 and 2, the air conditioner in this embodiment includes: on a downstream side of a cooling evaporator (condenser)^{1, a} mixing chamber 6 to which a warm air path 4 having a heating heat exchanger 2 and an auxiliary heater 3 as well as a bypass path 5 bypassing the warm air path 4 are connected and in which downstream sides of both the warm air path 4 and the bypass path 5 merge together to mix flows of air coming therethrough; a blowout path 7 connected to the mixing chamber 6; and an air mix door 8 that switches between the warm air path 4 and the bypass path 5. The bypass path 5 is disposed at a position eccentric in an upward direction with respect to the evaporator1, and an inlet 4a of the warm air path 4 is disposed at a position eccentric in a downward direction with respect to the evaporator 1. The warm air path 4 is connected to a side of the bypass path 5 while being curved.

The heating heat exchanger 2 is disposed in generally parallel with the evaporator 1, and is eccentric in a downward direction with respect to the inlet 4a of the warm air path 4. On a downstream side of this heat exchanger 2, an auxiliary heater 3, which is small in height and size compared to the heat exchanger 2, is disposed in series and parallel with the heat exchanger 2. The auxiliary heater 3 is so placed as to face to the inlet 4a of the warm air path 4 (i.e., placed where air speed of warm air having passed through the heat exchanger 2 has a first air speed, and a space S is formed under the auxiliary heater 3.

The heat exchanger 3 is composed of a hot-water circulation-type heat exchanger that generates heat by circulating hot water (engine coolant) from a vehicle engine, and includes a pair of tanks 9 and 10 provided to left and right sides, respectively, a plurality of hot water passages 11 connected to the tanks 9 and 10, and a plurality of fins 12 provided between the hot water passages 11, as shown in FIG. 3. The tank 9 is divided into a hot water inlet tank 9a positioned on a lower side and a hot water outlet tank 9b positioned on an upper side. A hot water inlet 13 provided to the hot water inlet tank 9a is disposed lower than a position opposite to the inlet 4a of the warm air path 4, and a hot water outlet 14 provided to the hot water outlet tank 9b is disposed at the position opposite to the inlet 4a of the warm air path 4.

The auxiliary heater 3 is composed, for example, of a PTC heater, and has a PCT stone that generates heat when energized, a base (position frame) on which the PCT stone is mounted, and upper and lower fins that holds the PCT stone therebetween, none of which are shown. Through these upper and lower fins, air is warmed.

In this embodiment, at the time of heating, the air mix door 8 is raised thereby to close the bypass path 5 and open the inlet 4a of the warm air path 4, as shown in FIG. 1. In this condition, the air having passed through the evaporator 1 enters the inlet 4a of the warm air path 4 and then heated by the heat exchanger 2. Afterwards, a portion of the resultant warm air is heated further by passing through the auxiliary heater 3. At the same time, another portion of the resultant warm air passes through an area below the position opposite to the inlet 4a of the warm air path 4 (i.e. an area in which a second air speed is slower than the first air speed), and bypasses the auxiliary heater 3 by passing through a space S under the auxiliary heater 3. Thereafter, the heated warm air and the bypass warm air are mixed in the warm air path 4 and then blown out through the mixing chamber 6 from the blowout path 7 to a vehicle cabin and the like.

According to this embodiment, a portion of the warm air having passed through the heat exchanger 2 passes through the auxiliary heater 3 having a first air speed and hence in large volume, so that auxiliary heating can be made sufficiently by the auxiliary heater 3. Furthermore, another portion of the warm air bypasses the auxiliary heater 3 by passing through the area in which a second air speed of the warm air is slower than the first air speed, so that the flow resistance of the warm air passing through the warm air path 4 is suppressed, which ensures the volume of the warm air. Therefore, at the time of heating, a comparatively high temperature and large volume of the warm air can be blown even when the heat exchanger 2 cannot generate sufficient heat.

Furthermore, according to this embodiment, the hot water inlet 13 is disposed lower than the position opposite to the inlet 4a of the warm air path 4, and a high temperature region of the heat exchanger 2 in a lower part thereof is away from the auxiliary heater 3, so that the influence of heat on the auxiliary heater 3 becomes comparatively small. Therefore, it is possible to reduce the temperature difference of the warm air blown out from the upper and lower sides of the auxiliary heater 3 immediately after it is activated, and it is also possible to prevent the auxiliary heater 3 from suppressing the heat generation based on self-regulation.

For example, according to a heating performance test made by the applicant of the present invention, when an air blowout volume was 250 m³/h, a temperature of the blown-out air was 36.3C° in the case that the heating heat exchanger 2 was used for heating and the auxiliary heater 3 was not activated, and a temperature of the blown-out air was 43.8C° in the case that both the heat exchanger 2 and the auxiliary heater 3 were used for heating. This means that the activation of the auxiliary heater 3 increased the temperature of the blown-out air by 7.5C°. Furthermore, when an air blowout volume was 290 m³/h, a temperature of the blown-out air was 35.4C° in the case that the heat exchanger 2 was used for heating and the auxiliary heater 3 was not activated, and a temperature of the blown-out air was 41.5C° in the case that both the heat exchanger 2 and the auxiliary heater 3 were used for heating. This means that the activation of the auxiliary heater 3 increased the temperature of the blown-out air by 6.1C°. Note that at this heating performance test, outside air temperature was -10C°, hot water temperature was 50C°, flow rate of the hot water was 6 L/min, voltage of the auxiliary heater 3 was 13V (constant), and the auxiliary heater 3 was activated on all stages (three stages).

The foregoing embodiment has handled the case that the heat exchanger 3 has the pair of tanks 9 and 10 on left and right sides, respectively, and the present invention is, however, limited to this case. The same advantageous effect as in the foregoing embodiment can be obtained even when the heat exchanger 2 is composed of a pair of tanks 20 and 21 provided on upper and lower sides, respectively, a plurality of hot water passages 22 connected to these tanks 20 and 21, and a plurality of fins 23 provided between the hot water passages 22, a hot water inlet 24 is connected to one end of the lower tank 21, and a hot water outlet 25 is connected to one end of the upper tank 20, as shown in FIG. 4.

The present invention advantageously provides an air conditioner that perform sufficient heating even when an engine is not warmed up immediately after the start of a vehicle, so that it is applicable as an air conditioner for vehicles in a cold district and also widely applicable as an air conditioner for general and industrial machinery.

## Claims

1. An air conditioner including, on a downstream side of a cooling evaporator (1), a mixing chamber (6) to which a warm air path (4) having a heating heat exchanger (2) being composed of a hot-water circulation-type heat exchanger (2) that generates heat by circulating hot water, and a bypass path (5) bypassing the warm air path (4) are connected, and in which downstream sides of the warm air path (4) and the bypass path (5) merge together to mix flows of air coming therethrough, and a blowout path (7) connected to the mixing chamber (6), the air conditioner comprising:
an auxiliary heater (3) provided at a position in which warm air having passed through the heat exchanger (2) has a first air speed, the auxiliary heater (3) being disposed in series with the heat exchanger (2), wherein
a portion of the warm air passes through the auxiliary heater (3),
**characterized in that**
another portion of the warm air passes through an area in which a second air speed is slower than the first air speed to bypass the auxiliary heater (3), and
a hot water inlet (13) of the hot-water circulation-type heat exchanger (2) is disposed lower than a position opposite to an inlet (4a) of the warm air path (4), a hot water outlet (14) of the hot-water circulation-type heat exchanger (2) is disposed at a position opposite to the inlet (4a) of the warm air path (4), and the hot water flows from a lower region to an upper region of the heat exchanger (2).

2. An air conditioner, according to claim 1, **characterized in that** the warm air path (4) having therein the heating heat exchanger (2) disposed in generally parallel with the evaporator (1), and the air conditioner comprises:
the auxiliary heater (3) smaller than the heat exchanger (2), and the auxiliary heater (3) being disposed in series with the heat exchanger (2) and opposite to the inlet (4a) of the warm air path, wherein, when the air conditioner is mounted in a vehicle,
the bypass path (5) is disposed at a position eccentric in an upward direction with respect to the evaporator (1),
the inlet (4a) of the warm air path (4) is disposed at a position eccentric in a downward direction with respect to the evaporator (1),
the warm air path (4) is connected to the bypass path (5) while being curved,
the heat exchanger (2) is disposed at a position eccentric in a downward direction with respect to the inlet (4a) of the warm air path (4),
a portion of warm air having passed through the heat exchanger (2) passes through the auxiliary heater (3), and
another portion of the warm air passes through a space (S) below the auxiliary heater (3) to bypass the same.

3. An air conditioner according to claim 1 or 2, **characterized in that** the heat exchanger (2) has a pair of tanks (9,10;20,21) provided on both sides, a plurality of hot water passages (11;22) connected to the tanks (9,10;20,21) and a plurality of fins (12;23) provided between the hot water passages (11;22), one of the tanks (9) is divided into a hot water inlet tank (9a) and a hot water outlet tank (9b), and the hot water inlet (13) provided to the hot water inlet tank (9a) is disposed lower than the position opposite to the inlet (4a) of the warm air path (4).

## Patentansprüche

1. Klimaanlage, enthaltend, auf der stromabwärtigen Seite einen kühlenden Verdampfer (1), eine Mischkammer (6), mit der ein Warmluftpfad (4), der einen erwärmenden Wärmetauscher (2) hat, der zusammengesetzt ist aus einem Wärmetauscher (2) vom Heißwasserzirkulations- Typ, der Wärme durch zirkulierendes Heißwasser erzeugt, und ein Bypasspfad (5), der der Warmluftpfad (4) umgeht, verbunden sind, und an deren stromabwärtigen Seiten der Warmluftpfad (4) und der Bypasspfad (5) verschmelzen, um Luftströme, die dort hindurchgehen, zusammenführen und ein Ausblaspfad (7) mit der Mischkammer (6) verbunden ist, wobei die Klimaanlage aufweist:
einen Hilfserwärmer (3), vorgesehen an einer Position, in der Warmluft, durchgegangen durch den Wärmetauscher (2), eine erste Luftgeschwindigkeit hat, wobei der Hilfserwärmer (3) in Reihe mit dem Wärmetauscher (2) angeordnet ist, wobei ein Teil der Warmluft durch den Hilfserwärmer (3) hindurchgeht,
**dadurch gekennzeichnet, dass**
ein weiterer Anteil der Warmluft durch einen Bereich hindurchgeht, in dem eine zweite Luftgeschwindigkeit niedriger als die erste Luftgeschwindigkeit ist, um den Hilfserwärmer (3) zu umgehen und
ein Heißwassereinlass (13) des Wärmetauschers (2) vom Heißwasserzirkulations- Typ niedriger als eine Position gegenüberliegend zu einem Einlass (4a) des Warmluftpfades (4) angeordnet ist, ein Heißwasserauslass (14) des Wärmetauschers (2) vom Heißwasserzirkulations- Typ in einer Position gegenüberliegend zu dem Einlass (4a) des Warmluftpfades (4) angeordnet ist und das Heißwasser von einem unteren Bereich in einen oberen Bereich des Wärmetauschers (2) fließt.

2. Klimaanlage nach Anspruch 1, **dadurch gekennzeichnet, dass** der Warmluftpfad (4) mit dem erwärmenden Wärmetauscher (2) darin im Wesentlichen parallel mit dem Verdampfer (1) angeordnet ist und die Klimaanlage aufweist:
den Hilfserwärmer (3), kleiner als der Wärmetauscher (2), und wobei der Hilfserwärmer (3) in Reihe mit dem Wärmetauscher (2) und gegenüberliegend zu dem Einlass (4) des Warmluftpfades (4) angeordnet ist, wobei, wenn die Klimaanlage in einem Fahrzeug montiert ist,
der Bypasspfad (5) an einer Position exzentrisch in einer stromaufwärtigen Richtung in Bezug auf den Verdampfer (1) angeordnet ist,
der Einlass (4a) des Warmluftpfades (4) an einer Position exzentrisch in einer stromabwärtigen Richtung in Bezug auf den Verdampfer (1) angeordnet ist,
der Warmluftpfad (4) mit dem Bypasspfad (5) verbunden ist, während er gekrümmt ist,
der Wärmetauscher (2) an einer Position exzentrisch in einer stromabwärtigen Richtung in Bezug auf den Einlass (4a) des Warmluftpfades (4) angeordnet ist,
ein Anteil der Warmluft, die durch den Wärmetauscher (2) hindurchgegangen ist,
durch den Hilfserwärmer (3) hindurchgeht, und
ein weiterer Anteil der Warmluft durch einen Raum (S) unter dem Hilfserwärmer (3), um denselben zu umgehen, hindurchgeht.

3. Klimaanlage nach Anspruch 1 oder 2, **dadurch gekennzeichnet, dass** der Wärmetauscher (2) ein Paar von Tanks (9, 10; 20,21) hat, vorgesehen auf beiden Seiten, eine Mehrzahl von Heißwasserkanälen (11; 22), verbunden mit den Tanks (9, 10; 20,21), und eine Mehrzahl von Rippen (12; 23), vorgesehen zwischen den Heißwasserkanälen (11; 22) hat, wobei einer der Tanks (9) in einen Heißwassereinlasstank (9a) und einen Heißwasserauslasstank (9b) geteilt ist und der Heißwassereinlass (13), vorgesehen an dem Heißwassereinlasstank (9a), niedriger als die Position gegenüberliegend dem Einlass (4a) des Warmluftpfades (4) angeordnet ist.

## Revendications

1. Climatiseur comprenant, sur un côté aval d'un évaporateur de refroidissement (1), une chambre de mélange (6) à laquelle sont reliées une trajectoire d'air chaud (4) comportant un échangeur de chaleur de chauffage (2) composé d'un échangeur de chaleur du type à circulation d'eau chaude (2) qui produit de la chaleur grâce à la circulation d'eau chaude, et une trajectoire de dérivation (5) qui contourne ladite trajectoire d'air chaud (4), et dans laquelle les côtés aval de la trajectoire d'air chaud (4) et de la trajectoire de dérivation (5) se rejoignent en vue du mélange des flux d'air qu'elles véhiculent, et une trajectoire d'échappement (7) reliée à la chambre de mélange (6), le climatiseur comprenant :
un dispositif de chauffage auxiliaire (3) qui est prévu à un endroit où l'air chaud qui a traversé l'échangeur de chaleur (2) présente une première vitesse d'air, le dispositif de chauffage auxiliaire (3) étant disposé en série par rapport à l'échangeur de chaleur (2),
étant précisé qu'une partie de l'air chaud traverse le dispositif de chauffage auxiliaire (3),
**caractérisé en ce qu'**une autre partie de l'air chaud traverse une zone dans laquelle une seconde vitesse d'air est inférieure à la première vitesse d'air pour contourner le dispositif de chauffage auxiliaire (3), et
**en ce qu'**une admission d'eau chaude (13) de l'échangeur de chaleur du type à circulation d'eau chaude (2) est disposée plus bas qu'un endroit situé en face d'une admission (4a) de la trajectoire d'air chaud (4), tandis qu'une sortie d'eau chaude (14) de l'échangeur de chaleur du type à circulation d'eau chaude (2) est disposée à un endroit situé en face de l'admission (4a) de la trajectoire d'air chaud (4), et que l'eau chaude coule d'une zone inférieure jusqu'à une zone supérieure de l'échangeur de chaleur (2).

2. Climatiseur selon la revendication 1, **caractérisé en ce que** la trajectoire d'air chaud (4) contient l'échangeur de chaleur de chauffage (2) disposé globalement parallèlement à l'évaporateur (1), et le climatiseur comprend :
le dispositif de chauffage auxiliaire (3) plus petit que l'échangeur de chaleur (2), et le dispositif de chauffage auxiliaire (3) disposé en série par rapport à l'échangeur de chaleur (2) et en face de l'admission (4a) de la trajectoire d'air chaud, étant précisé que quand le climatiseur est monté dans un véhicule,
la trajectoire de dérivation (5) est disposée à un endroit excentrique, dans un sens ascendant, par rapport à l'évaporateur (1),
l'admission (4a) de la trajectoire d'air chaud (4) est disposée à un endroit excentrique, dans un sens descendant, par rapport à l'évaporateur (1),
la trajectoire d'air chaud (4) est reliée à la trajectoire de dérivation (5) en étant courbe,
l'échangeur de chaleur (2) est disposé à un endroit excentrique, dans un sens descendant, par rapport à l'admission (4a) de la trajectoire d'air chaud (4),
une partie de l'air chaud qui a traversé l'échangeur de chaleur (2) traverse le dispositif de chauffage auxiliaire (3), et
une autre partie de l'air chaud traverse un espace (S) situé sous le dispositif de chauffage auxiliaire (3) pour contourner celui-ci.

3. Climatiseur selon la revendication 1 ou 2, **caractérisé en ce que** l'échangeur de chaleur (2) comporte deux réservoirs (9, 10 ; 20, 21) prévus des deux côtés, plusieurs passages d'eau chaude (11 ; 22) reliés aux réservoirs (9, 10 ; 20, 21) et plusieurs ailettes (12 ; 23) disposées entre les passages d'eau chaude (11 ; 22), l'un des réservoirs (9) est divisé en un réservoir d'admission d'eau chaude (9a) et un réservoir de sortie d'eau chaude (9b), et l'admission d'eau chaude (13) prévue pour le réservoir d'admission d'eau chaude (9a) est disposée plus bas que l'endroit situé en face de l'admission (4a) de la trajectoire d'air chaud (4).
